# EUROPÄISCHE PATENTSCHRIFT

(11) **EP 1 630 757 B1**
(45) Veröffentlichungstag und Bekanntmachung des Hinweises auf die Patenterteilung: **21.03.2012**
(21) Anmeldenummer: 04104114.6
(22) Anmeldetag: 26.08.2004
(51) Int. Cl.: G08B 13/24

(54) **Verfahren und System, um verlorene oder gestohlene Gegenstände zu finden**
Method and system for detecting lost or stolen objects
Méthode et système pour détecter des objets perdus ou volés

(43) Veröffentlichungstag der Anmeldung: 01.03.2006
(73) Patentinhaber: Swisscom AG, 3050 Bern (CH)
(72) Erfinder: Ritter, Rudolf, 3032 Zollikofen (CH)
(74) Vertreter: P&TS SA (AG, Ltd.)

(56) Entgegenhaltungen:
- US-A1- 2002 014 955
- US-A1- 2003 095 032
- US-A1- 2003 218 532
- US-B1- 6 259 367
- US-B1- 6 662 078

## Beschreibung

Die vorliegende Erfindung betrifft ein Verfahren, um verlorene oder gestohlene Gegenstände, einschliesslich Produkte, immaterielle Güter, Personen und Tiere, anhand von RFID-Tags (Radio Frequency Identification) zu finden.

Essind schon verschiedene Systeme und Verfahren bekannt, um Gegenstände, die sich nicht am erwarteten Ort befinden zu suchen. Auch Systeme, die Transpondersoder RFIDs einsetzen, sind an sich schon bekannt.

Die meisten bekannten Systeme verwenden jedoch spezielle RFIDs, die nur für diesen Zweck eingesetzt werden, und die meisten nur mit entsprechenden proprietären RFID-Lesegeräten einsetzbar sind. Dies hat den Nachteil, dass nur wenige Gegenstände, zum Beispiel Autosoder Kinder, markiert werden; für kleinere oder herkömmlichere Gegenstände lohnt sich der Aufwand und die Investition nicht.

Ausserdem kann ein verlorener Gegenstand nur geortet werden, wenn er sich in der Nähe eines passenden Lesegerätsbefindet. Die Möglichkeit, einen verlorenen Gegenstand zu finden, ist durch die begrenzte Reichweite und geringe Verbreitung der benötigten speziellen Lesegeräte eingeschränkt.

Essind auch Verfahren und Systeme bekannt, die eine spezielle, gewidmete Infrastruktur benötigen, beispielsweise Satelliten oder ein Netz von Antennen, um verlorene Gegenstände an beliebigen Orten zu orten. Die Kosten für eine solche Infrastruktur sind sehr hoch, so dasssolche Systeme nur innerhalb von Gebäuden eingesetzt wurden und nicht auf nationaler oder gar internationaler Ebene.

Oft funktioniert ein Tag zur Markierung eines Gegenstands nur in Zusammenarbeit mit einem einzigen Lesegerät. Kann ein Lesegerät verschiedene Tags lesen, mussim Tag oder in einer Datenbank eingegeben werden, welche Tagswelchem Besitzer gehören. Dieser Registrierungsvorgang, der vom Verkäufer oder vom Eigentümer des Gegenstands durchgeführt werden muss, ist aufwendig und fehleranfällig. Esfehlt ausserdem ein universelles System zur Identifizierung der Eigentümer; oft wird verlangt, dassdie komplette Adresse des Eigentümers eingegeben wird, was sich für den Schutz von weniger wertvollen Gegenständen kaum lohnt. Zieht der Eigentümer um, mussdie Adresse jedesTagsgeändert werden. Wird die Adresse in einer zentralen Datenbank abgelegt, mussdiese Datenbank vorzugsweise weltweit erreichbar sein, möglicherweise in einer Vielzahl von Sprachen damit ein Finder die Adresse des Eigentümers problemlosfindet. Wird die Adresse dagegen in den Tag selbst geschrieben, muss ein relativ grosser Speicher im Tag vorhanden sein, wasden Preisund die Einsetzbarkeit des Tags einschränkt.

Esist daher ein Ziel der vorliegenden Erfindung, ein Verfahren anzubieten, mit welchem diese Nachteile vermieden werden.

DiesesZiel wird durch ein Verfahren mit den Merkmalen des Hauptanspruchs erreicht.

Dies hat den Vorteil, dassdie Registrierung eines Gegenstands einfach durch das Lesen einesan den Gegenstand angebrachten RFID-Tag erfolgt und durch die Paarung einer Identifizierung im Tag mit einer Identifizierung in der SIM-Karte des Eigentümers erfolgt. Wird der Tag mit einem RFID-Lesegerät im Mobilgerät gelesen oder das mit dem Mobilgerät verbunden ist, kann diese Paarung automatisch vom RFID-Lesegerät durchgeführt werden.

Dies hat auch den Vorteil, dassdie Identifizierung in der SIM-Karte universell, verständlich und eindeutig ist.

Sinngemäss kann die Identifizierung desBenutzersim Mobilfunknetz unabhängig von der SIM-Karte im Mobilgerät vorgenommen werden.

Ausserdem kann das erfindungsgemässe Verfahren auch mit ganz herkömmlichen RFID-Tags, beispielsweise EPC-Tags, die für die Markierung der Gegenstände während der Herstellung und Vertrieb verwendet werden, eingesetzt werden. Gewidmete Tagssind nicht nötig. Solche herkömmlichen Tagssind billig und können weltweit von einer grossen Anzahl von RFID-Lesegeräten gelesen werden, einschliesslich RFID-Lesegeräte, die in einem Mobilgerät eingebaut sind und die eine Sprach- oder Datenverbindung mit dem Mobilgerät des Egentümersdes verlorenen Gegenstands aufbauen können, um das Finden des Gegenstands zu melden.

Das Verfahren kann ohne zentrale Infrastruktur eingesetzt werden und trotzdem dasweltweite Suchen und Finden von verlorenen Gegenständen erlauben.

Die vorliegende Erfindung wird im Folgenden anhand der Figuren näher beschrieben. Eszeigen:
Fig. 1 ein Blockschaltbild eines Systems mit einem Mobilgerät, einem RFID-Lesegerät und einem RFID-Tag in welchem die Identifizierung, die anhand der SIM-Karte im Mobilgerät ermittelt wird, abgelegt ist.
Fig. 2 ein Blockschaltbild eines Systems mit einem Mobilgerät, einem RFID-Lesegerät, einem RFID-Tag und einer zentralen Datenbank, in welcher die Identifizierung ausder SIM-Karte mit der Identifizierung des Tagsverknüpft ist.
Fig. 3 ein Blockschaltbild eines Systems mit einem Mobilgerät, einem RFID-Lesegerät, einem RFID-Tag und Hypertext Seiten, in welchen die Identifizierung ausder SIM-Karte mit der Identifizierung desTags verknüpft ist.

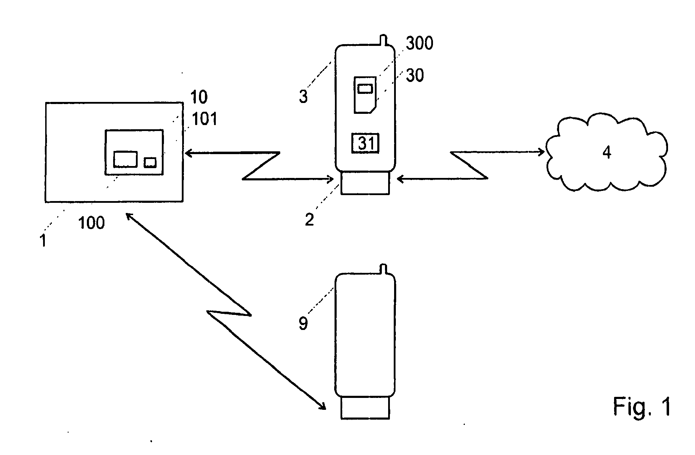

Die Figur 1 zeigt das System, dasvon einem Benutzer (zum Beispiel einem Mobilteilnehmer) verwendet wird, um mit dem erfindungsgemässen Verfahren Gegenstände zu markieren und zu finden. Ein Mobilgerät 3 (zum Beispiel ein Mobilfunktelefon oder ein PDA mit einer Schnittstelle für ein zellulares Mobilfunknetz) kann Kurzmeldungen (zum Beispiel SMS und USSD) und Daten (zum Beispiel IP-Pakete) auseinem Mobilfunknetz 4 empfangen und an dieses Netz senden. DasMobilfunknetz 4 ist beispielsweise ein GSM, GPRS, HSCSD, EDGE, UMTS, CDMA, WLAN oder Bluetooth-Netz, über welches auch Daten übermittelt werden können. Das Mobilgerät 3 enthält ein Identifizierungsmodul (zum Beispiel eine SIM-Karte 30), um das Gerät durch das Netz beziehungsweise am Netz 4 zu identifizieren. Eine oder mehrere Software-Anwendungen 31 im Mobilgerät 3 und/oder im Identifizierungsmodul 30 können von einem Prozessor ausgeführt werden.

DasMobilgerät 3 umfasst ausserdem einen RFID-Lese/Schreibeteil 2, oder ist mit einem solchen Lese/Schreibeteil verbunden (beispielsweise über eine USB, Frewire, PCCard, Compactflash, proprietäre, usw. Verbindung, oder über eine Bluetooth oder WLAN-kontaktlose Verbindung). Das Lese/Schreibeteil 2 umfasst einen Mikrokontroller und mindestenseine Antenne oder Spule, um kontaktlos Daten mit RFID-Komponenten (Tags) 10 in einem Produkt 1 in der unmittelbaren Nähe auszutauschen. Die Datenübertragung erfolgt vorzugsweise im Frequenzbereich 13,56MHz, 900MHz und/oder 860-930MHz; andere Frequenzbereiche sind aber auch möglich. Das Lese/Schreibeteil 2 kann vorzugsweise wahlweise in verschiedenen Frequenzbereichen und mit unterschiedlichen RFIDs arbeiten. Die Tragweite beim Lesen der RFIDs beträgt vorzugsweise zwischen einigen Zentimetern bis mehreren Metern (beispielsweise 10 Meter) - je nach Orientierung des Lese/Schreibeteils und des Tags. Die Verbindung erfolgt vorzugsweise im Half-Duplex Modusmit einer ASK Backscatter Modulation. Der Tag 10 wird vorzugsweise vom Lese/Schreibeteil 2 gespeist und braucht somit selber keine eigene Energiequelle.

Jeder Tag 10 umfasst mindestenseinen Chip und eine Antenne. Jeder Chip 10 enthält einen permanenten Speicherbereich, in welchem während der Herstellung oder während der Personalisierung des Tags eine Identifizierung desTags 100 abgelegt wird.

Die Tag-Identifizierung 100 identifiziert eindeutig jeden bestimmten Tag 1; jeder Tag hat vorzugsweise eine andere Identifizierung. Die Identifizierung ist vorzugsweise unfälschbar.

Die Identifizierungen 100 in den verschiedenen Tags 10 umfassen vorzugsweise 64, 96 oder mehr Bitsund sind hierarchisch organisiert. Andere Daten können im Speicherbereich des Chips 10 abgelegt und vom Lese/Schreibeteil 2 gelesen werden.

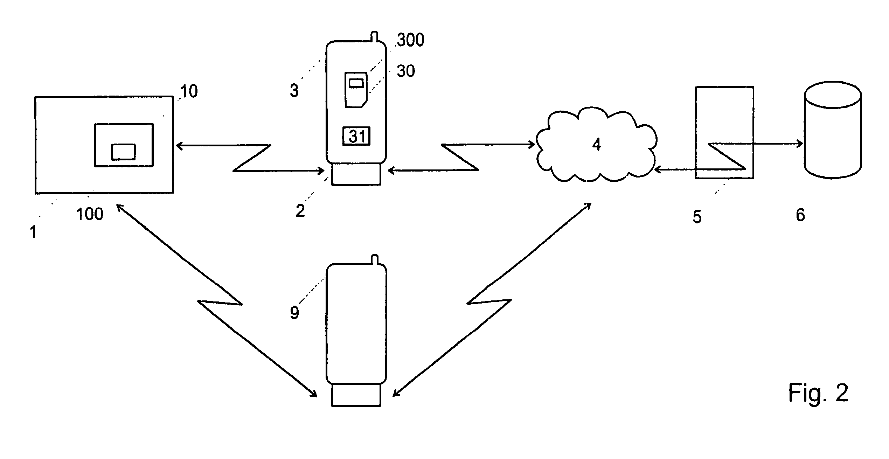

Der Chip 10 ist vorzugsweise ein Nur-Lese-Chip, welcher günstig und in kleiner Grösse hergestellt werden kann. Wiederbeschreibbare Chips können aber im Rahmen der Erfindung auch eingesetzt werden. Insbesondere die Ausführungsform der Erfindung, die auf der Figur 2 dargestellt ist, benötigt RFID-Tags mit einem wiederbeschreibbaren Speicherbereich.

Tag-Identifizierungen 100 werden vorzugsweise von einer gemeinsamen Autorität an verschiedene Produkthersteller, Mobilfunknetzanbieter und Mehrwertdienstanbieter verteilt; ein Teil des Codes gibt vorzugsweise die Identität desAnbietersdes Produktes 1 an. Der Produktanbieter reserviert eine Reihe von Identifizierungen bei der gemeinsamen Autorität und speichert einen Teil dieser Identifizierungen in Tags 10 die dann mit den Produkten vertrieben werden. En Produkt kann von mehreren Organisationen mit unterschiedlichen Tags versehen werden. Die Tags sind vorzugsweise EPC-Tags (Electronic Product Codes), die von der EPC Global Organisation promoviert werden und die vor allem zur Markierung von industriellen Gegenständen während der Herstellung und dem Vertrieb bestimmt sind. Der Tag 10 wird im Prinzip vom Produkthersteller am Produkt 1 angebracht.

Mindestenseine Anwendung 31, die über das Mobilfunknetz in das Mobilgerät 3 oder in die SIM-Karte 30 geladen wird, beispielsweise ein Applet, kann im Mobilgerät 3 und/oder in der SIM-Karte 30 vorgesehen werden, um Tag-Identifizierungen in benachbarten Tagsüber dasLese/Schreibeteil 2 zu lesen und mit Identifizierungen ausder SIM-Karte zu paaren, wie später erläutert. Diese Paarung kann aber auch von anderen Vorrichtungen durchgeführt werden. Durch die Verknüpfung der Tag-Identifizierung 100 mit einer Identifizierung 300 ausder SIM-Karte 30 und die Speicherung des Paars in einem Speicherbereich im Tag 10 oder in einem Fernserver 6 wird der Eigentümer des Gegenstands 1 bekannt gemacht.

Die Identifizierung 300 ausder SIM-Karte 30, die zur eindeutigen Identifizierung des Eigentümers des Gegenstands 1 verwendet wird, kann vorzugsweise in einem GSM-System die bereitsvorhandene MSISDN oder IMSI-Identifizierung sein, oder eine andere äquivalente Identifizierung (IP oder MAC) in einem anderen Mobilfunknetzsystem und/oder eine an diesen Zweck gewidmete ad hoc Identifizierung. Möglich ist auch dassdie komplette elektronische oder Postadresse des Eigentümersanhand der SIM-Karte 30 gewonnen wird.

Das Lesen einer Tag-Identifizierung 100 aus einem Tag 10 wird vorzugsweise vom Mobilgerät 3 initiiert; möglich ist beispielsweise, dassdas Mobilgerät 3 stets oder periodisch nach benachbarten Tags 10 sucht und Identifizierungen 100 in gefundenen Tags liest und bearbeitet oder weiterleitet. In einer anderen, stromsparenden Variante wird das Lesen vom Benutzer des Mobilgeräts 3 initiiert, der eine entsprechende Anwendung 31 startet oder einen Befehl eingibt, wenn er ein Tag lesen will. Das Lesen der Tags mit dem Mobilgerät 3 oder mit einem anderen Gerät 2 kann auch von einer externen Vorrichtung (zum Beispiel einer Verkaufsstelle oder einem Automaten) über eine Schnittstelle im Nahbereich (zum Beispiel Bluetooth oder WLAN) über das Mobilfunknetz 4, oder über einen Link auf einer besuchten WEB oder WAP-Seite initiiert werden.

Je nach Anwendung 31 kann auch ein Passwort oder eine andere Authentifikation verlangt werden, bevor eine Paarung zwischen einer Tag-Identifizierung 100 und einer Identifizierung 300 ausder SIM-Karte 30 erfolgt. DasPasswort wird beispielsweise vom Verkäufer des Gegenstands dem neuen Benutzer mitgeteilt und wird benötigt um die Tag-Identifizierung 100 zu lesen, um die SIM-Identifizierung 300 ausdem Tag 10 zu lesen und/oder um die Paarung in den geeigneten Speicherbereich zu schreiben. Auf diese Weise kann sichergestellt werden, dassnur der berechtigte Eigentümer des Gegenstands 1 sich diesen Gegenstand aneignen kann.

Die Sicherheit wird ausserdem durch die während dem Registrierungsvorgang benötigte Nähe zwischen dem Mobilgerät 3 und dem Tag 10 sichergestellt. Nur ein Benutzer, der sich innerhalb der Reichweite des RFID-Tags 10 befindet, kann sich den markierten Gegenstand aneignen.

Im Ausführungsbeispiel der Figur 1 wird die Paarung zwischen der Tag-Identifizierung 100 und der Eigentümer-Identifizierung 300 ausder SIM-Karte 30 im Tag 10 gespeichert. Zu diesem Zweck schreibt der Eigentümer, der sich den Gegenstand 1 aneignen kann, seine Identifizierung in einen passenden wiederbeschreibbaren Speicherbereich des Tags an hand einer Anwendung 31 und dem RFID-Lesegerät 2. Der Schreibvorgang erfolgt vorzugsweise erst nachdem eine ausdem Tag 10 gelesene Beschreibung des Gegenstands an das Mobilgerät 3 übertragen und dem Eigentümer angezeigt wurde; damit kann sichergestellt werden, dassder Eigentümer sich nicht unbewusst einen anderen markierten Gegenstand aneignet.

Um zu verhindern, dasssich ein Benutzer einen fremden Gegenstand 1 aneignet, kann in einer bevorzugten Variante ein elektronischer Schlüssel verlangt werden, damit die Paarung ermöglicht oder gespeichert werden kann. Der Schlüssel kann beispielsweise vom Tag 10 abhängig sein und dem Benutzer durch den Verkäufer des markierten Gegenstands, oder von einer anderen Instanz, die die Eigentumsrechte des Gegenstands 1 authentifizieren kann, mitgeteilt wird.

In einer anderen Variante wird die Paarung vom Verkäufer des markierten Gegenstands 1, oder von einer anderen Instanz, die die Eigentumsrechte des Gegenstands authentifizieren kann, durchgeführt oder gespeichert.

Möglich ist auch dasseine bereits registrierte Paarung von einer Instanz, die die Eigentumsrechte des Gegenstandsauthentifizieren kann, gelöscht oder ersetzt wird, wobei dieser Vorgang auch über das Mobilfunknetz 4 ferngesteuert werden kann.

Im Ausführungsbeispiel der Figur 2 wird die Paarung zwischen der Tag-Identifizierung 100 und der Eigentümer-Identifizierung 300 ausder SIM-Karte 30 in einer zentralen Datenbank 6 gespeichert. Die Datenbank wird von einem Dienstanbieter betrieben, der diesen Dienst möglicherweise verrechnet und enthält eine Liste von Tag-Identifizierungen und entsprechenden Eigentümer-Identifizierungen.

Im dargestellten Beispiel der Figur 2 werden die Egentümer-Identifizierungen 300 in einen Anonymiser 5 durch permanente Alias ersetzt, damit die Anonymität der Gegenstand-Eigentümer gewährleistet wird. Nur der Anonymizer kennt die Verbindung zwischen den Alias und den Eigentümer-Identifizierungen.

Der Registrierungsvorgang, durch welchen die Paarung in die Datenbank 6 abgelegt wird, beginnt mit dem Lesen der Tag-Identifizierung 300 ausdem Tag 30 durch das Mobilgerät 3. Diese Identifizierung wird mit der Eigentümer-Identifizierung ausder SM-Karte 30 verknüpft und in eine Datenmeldung verpackt, die an die Datenbank 6 gesendet wird. In einer bevorzugten Variante erfolgt die Übertragung des Paars über zugunsten des Dienstanbieters des Servers höher verrechnete Kurzmeldungen, zum Beispiel SMS. Möglich ist beispielsweise auch eine Übertragung über vom Mobilgerät gesendete E-Mails, über dasWEB oder WAP. Möglich ist auch eine Übertragung der Tag-Identifizierung 300 und der Eigentümer-Identifizierung an einen nicht dargestellten Rechner des Eigentümers, beispielsweise über Bluetooth, USB oder IrdA, und dasseine passende Anwendung im Rechner das Paar an die Datenbank sendet.

Die Datenbank 6 kann in einer Ausführungsform eine Authentisierung des Senders verlangen, beispielsweise über Passwörter, über biometrische Verfahren oder anhand der kryptographischen Signierungsmittel in der SIM-Karte oder im Mobilgerät 3. Auf diese Weise kann sichergestellt werden, dassdie Meldung tatsächlich vom beanspruchten Eigentümer gesendet wurde. Auf diese Weise kann das Risiko reduziert werden, dass ein Dritter sich einen Gegenstand unberechtigt aneignet. Möglich ist aber auch, dassdie Authentifizierung nur durch den Empfang der Identifizierung ausder SIM-Karte gewährleistet wird.

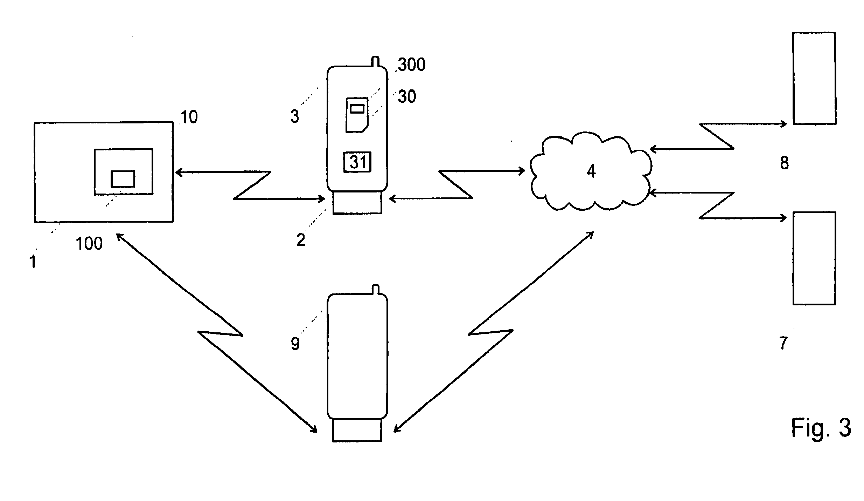

Im Ausführungsbeispiel der Figur 3 wird die Paarung zwischen der Tag-Identifizierung 100 und der Eigentümer-Identifizierung 300 ausder SIM-Karte 30 in einer Seite in einem Server 7 gespeichert. Der Server 7 ist über Internet oder ein Intranet mit einem Namen-Dienstserver 8 verbunden, in welchem für jede Tag-Identifizierung eine entsprechende elektronische Adresse einer elektronischen Hypertext-Seite abgelegt ist.

Eine Lese- oder Schreib-Anfrage mit einer Tag-Identifizierung 100 wird vom Server 7 an den Namen-Dienstserver 8 geleitet, der mit der entsprechenden elektronischen Adresse der Seite, die der Tag-Identifizierung entspricht, antwortet. Die elektronische Adresse besteht beispielsweise aus einem URL oder einer anderen Adresse für ein TCP-IP Netz.

Die Seite im Server 7, die der Tag-Identifizierung entspricht, umfasst eine Eigentümer-Identifizierung 300 ausder SIM-Karte 30, oder zumindest ein Alias, anhand welcher ein nicht dargestellter Anonymizer diese Eigentümeridentifizierung ermitteln kann.

Der Namen-Dienstserver 8 kann vom Betreiber des Servers 7 verwaltet werden und/oder von externen Entitäten (beispielsweise von der Organisation, die die Codes 100 an die verschiedenen Firmen verteilt). Mehrere Namen-Dienstserver können miteinander verbunden werden, so dassdie gewünschte Adresse in einem anderen Namen-Dienstserver gesucht wird, wenn sie sich nicht im Server 8 befindet. Dieserlaubt zum Beispiel einem Mobilfunknetzbetreiber, auch Codesvon anderen Organisationen zu bearbeiten. En lokaler Cache einesexternen Namendienstes kann auch im Server 7 oder in der Domain des Servers 7 vorgesehen werden; dieser Cache kann beispielsweise nur die Adressen enthalten, die den Codes entsprechen, die sich in Wertkarten des Mobilfunknetzbetreibers befinden.

En RFID-Lesegerät, das eine Tag-Identifizierung 100 liest, kann somit diese Identifizierung stetsan die Adresse, die der Tag-Identifizierung im Namendienstserver 8 entspricht, senden. Die Behandlung der Meldung ist somit nur von der Tag-Identifizierung in der Meldung abhängig. Gleiche Meldungen, die an unterschiedliche Dienstleistungsanbieter gelangen, können somit genau die Bereitstellung der gleichen Dienstleistung oder Information verursachen.

Die Verknüpfung im Namendienstserver 8 zwischen einer Tag-Identifizierung und einer Adresse kann vorzugsweise jederzeit geändert werden (beispielsweise vom Gegenstand-Eigentümer, beispielsweise über ein dediziertes WEB-Formular). Dieserlaubt, die elektronische Adresse einer Seite oder eines Domainszu ändern, ohne die Tag-Benutzer informieren zu müssen.

Die Seite im Server 7 umfasst möglicherweise einen Hypertext-Inhalt in einer Markup-Sprache. Der Inhalt der Seite wird mit der Identifizierung 300 des Eigentümersoder mit einem Aliasergänzt, wenn der Eigentümer sich einen Gegenstand 1 angeeignet hat und eine entsprechende Meldung (zum Beispiel eine SMS, MMS, E-Mail oder über eine Web-Form) an die Seite, die der Tag-Identifizierung entspricht, gesendet hat.

In einer Variante umfasst diese Seite einen XML-Inhalt (eXtended Markup Language). In einer anderen Variante umfasst die Seite einen PML-Inhalt (Product Marking Language). Die Seite kann auch SOAP-Protokol (Simple Object Access Protocol), .NET- Framework oder andere Web-Dienste unterstützen, mit welchen das Mobilgerät 3 auf Dienste und Objekte des Servers 7 zugreifen kann. In diesem Fall umfasst daserfindungsgemässe Verfahren die Bereitstellung von ausführbaren Programm-Code-Elementen oder SOAP- und/oder .NET-Diensten.

Das RFID-Lesegerät 3 lädt die gewünschte Seite vom Server 7 fern, und/oder greift auf den gewünschten Dienst (oder das Objekt an der angegebenen Adresse) zu, um die Identifizierung des Eigentümers des markierten Gegenstands 1 dem Benutzer des Lesegeräts mitzuteilen. Der Benutzer kann die gewünschte Information beispielsweise mit einem normalen Browser wiedergeben.

In allen Ausführungsvarianten wird der Registrierungsprozess vorzugsweise vom Eigentümer des Gegenstands ausgelöst, indem er eine Identifizierung 300 im Tag 10 speichert (Fig. 1) oder indem er die Tag-Identifizierung 100 ausdem Tag 10 liest, mit der Identifizierung ausder SM-Karte verknüpfen lässt und an einen fernen Speicherbereich 7 überträgt (Fig. 2, 3). Möglich ist aber auch ein Registrierungsvorgang, der vom Mobilgerät 2, 3 automatisch ausgelöst wird, jedesmal wenn ein markierter Gegenstand ohne Eigentümer, oder ein alsverloren markierter Gegenstand, gefunden wird, oder eine Registrierung, die von einer Drittpartei, beispielsweise durch den Verkäufer des Gegenstands 1, ausgelöst wird. In diesem letzten Fall mussdie registrierende Drittpartei auch auf die Identifizierung 300 in der SIM-Karte zugreifen können, beispielsweise über eine Bluetooth-Schnittstelle oder indem eine Kurzmeldung an das Mobilgerät 3 mit Bitte um Antwort gesendet wird.

Wie bereitserwähnt kann ein Schlüssel vom Tag und/oder von der Anwendung 31 verlangt werden, damit der Registrierungsprozess erfolgen kann, wobei der Schüssel vom Tag abhängig sein kann und von einer Instanz, die die Eigentumsrechte des Gegenstands prüfen kann, verteilt wird.

Die Paarung, die im Tag 10, in der Datenbank 6 oder auf der PML-Seite 7 abgelegt ist, kann in allen Ausführungsvarianten elektronisch signiert werden und eventuell mit einem Zeitstempel versehen werden. Auf diese Weise kann sichergestellt werden, dassdie Paarung nicht geändert wird und insbesondere dassdie Identifizierung 300 des Eigentümers nicht ersetzt wird. Ändert sich der Eigentümer des Gegenstands, werden vorzugsweise alle sukzessiven Eigentümer gespeichert. Auf diese Weise können auch frühere Eigentümer eines Gegenstandsgefunden werden.

Während des Registrierungsvorgangswird vorzugsweise die Tag-Identifizierung automatisch im Mobilgerät 3 oder in einem mit diesem Mobilgerät verbundenen Rechner kopiert, damit der Eigentümer auch nach einem möglichen Verlust des Gegenstands sich an diese Identifizierung erinnern kann. Die Identifizierung kann möglicherweise elektronisch signiert und mit einem Zeitstempel versehen werden, und somit als Eigentumsbeweisdienen.

Wir werden jetzt den Vorgang nach dem Registrierungsvorgang beschreiben.

In einer ersten Ausführungsform sucht eine Anwendung 31 im Mobilgerät 3 oder im Lesegerät 2 periodisch, oder manuell vom Benutzer initiiert, nach registrierten Gegenständen. Zu diesem Zweck werden Anfragen an den Tag 10 gesendet, die den Tag wecken und eine Antwort auslösen sollen. Wird keine Antwort erhalten, kann vermutet werden, dass der Gegenstand verloren wurde oder sich ausserhalb der Reichweite des Lesegeräts2 befindet. Das Mobilgerät kann in einem solchen Fall noch mal versuchen den Tag zu finden, beispielsweise erst nach einer gewissen Zeit oder mit einer grösseren Sendestärke. Bleibt der Tag 10 unerreichbar, gilt der markierte Gegenstand alsvermutlich verloren. Dieser Zustand kann dem Eigentümer durch ein visuelles Signal oder durch ein Tonsignal des Mobilgeräts2, 3 mitgeteilt werden. Möglich ist auch, dassandere Mobilteilnehmer automatisch oder nach einer Bestätigung des Eigentümers über den Verlust informiert werden, beispielsweise indem eine Meldung im Broadcastmodusmindestensim geographischen Bereich, wo sich der Tag befindet, gesendet wird und/oder indem die Datenbank 6 beziehungsweise die PML-Seite im Server 7, die der Tag-Identifizierung entspricht, mit einem Hinweisauf den Verlust ergänzt wird. Mobilteilnehmer, die den Gegenstand finden, können die Tag-Identifizierung mit ihrem Mobilgerät lesen, auf die Datenbank 6 beziehungsweise auf die PML-Seite 7 zugreifen, erfahren dassder Gegenstand als verloren gilt und sich in Kontakt mit dem Eigentümer setzen.

In einer zweiten Ausführungsform schreibt das Mobilgerät 2, 3 periodisch eine Zeitmarke in den Tag 10, wenn essich mit diesem Tag verbinden kann. Wird der markierte Gegenstand von einem Dritten mit einem zweiten Mobilfunkgerät 9 gefunden, kann anhand des Alters der letzten Zeitmarke ermittelt werden, ob sich der Gegenstand seit langem entfernt von seinem Eigentümer befindet. Möglich ist auch, dassder Standort periodisch aufgezeichnet wird, um zu ermitteln, wo sich der Eigentümer das letzte Mal mit dem Gegenstand verbunden hat.

In einer dritten Ausführungsform fragt jeder Dritte 9, der mit dem Tag 10 eine Verbindung automatisch oder manuell initiiert, ob der Tag 10 registriert ist und ob er noch in Kontakt mit seinem Eigentümer ist. Der Tag wird durch die Anfrage geweckt und versucht eine Verbindung mit dem RFID-Lesegerät 3 des Eigentümers aufzubauen. Klappt dieser Versuch nicht, meldet sich der Tag alsverloren.

Wird der Verlust eines Gegenstands vom Eigentümer, von einem Dritten 9 oder vom Tag selbst festgestellt, kann dieser Verlust je nach Verbindungsmöglichkeiten in der Datenbank 6, auf der entsprechenden PML-Seite im Server 7 und/oder im Tag 10 gemeldet werden. Auf diese Weise kann ein Dritter 9, der den Tag findet, und/oder der Eigentümer selbst, erfahren, dassder Gegenstand 1 alsverloren gilt. Möglich ist auch dassder Verlust über Datenmeldungen, die im Broadcast-Modusmindestensin einem eingeschränkten geographischen Bereich um den Ort des Verlusts gesendet werden, an eine Gemeinschaft von Mobilteilnehmern gemeldet wird. Dabei kann die Sendung der Broadcast-Meldung vom Mobilgerät des Egentümersoder von einem zentralen Server, beispielsweise dem Server in welchem die Datenbank 6 beherbergt ist, initiiert werden.

In einer bevorzugten Variante kann der Eigentümer eine Belohnung versprechen und anmelden, wenn er den Verlust eines Gegenstands feststellt. Die Belohnung, einschliesslich Typ, Betrag und Modalitäten, kann in der Datenbank 6 beziehungsweise auf der PML-Seite 7, die der Tag-Identifizierung entspricht, angemeldet werden. Die Belohung kann beispielsweise über passende Textmeldungen an eine vorbestimmte Adresse, oder vorzugsweise über Web- oder Wap-Formen ausdem Mobilgerät 3 oder aus einem anderen Internet Terminal gesendet werden.

Wird ein verlorener oder gestohlener Gegenstand von einem Dritten 9 gefunden, mussvorerst festgestellt werden, dassder Gegenstand seinen Eigentümer verloren hat. Bei manchen Gegenstände (ein schliesslich Personen, Kindern und Tieren) und Situationen kann sich dieser Zustand unmittelbar ergeben. Bei anderen Gegenständen (etwa bei gestohlenen Autosauf einem Parkplatz) kann diese Feststellung erfolgen, indem der Tag 10 oder das Feld in der Datenbank 6, beziehungsweise die PML-Seite 7, die der Tag-Identifizierung entsprechen, eine Verlustmeldung enthalten.

In einer Ausführungsform scannen mindestensgewisse RFID-Lesegeräte 3 kontinuierlich oder regeimässig nach RFID-Tags 10 in der Nähe, um zu ermitteln, ob diese Gegenstände verloren sind. Benutzer können initiiert werden diesen Suchmodusmöglichst oft einzuschalten, beispielsweise indem die Suche oder zumindest das Enden oder die Rückgabe von gefundenen Gegenständen finanziell belohnt wird. Möglich ist auch, dassdie permanente und regelmässige Suche nach verlorenen Gegenständen erfordert wird, um selbst Gegenstände registrieren zu dürfen.

Nachdem der findende Dritte 9 festgestellt hat, dassein gefundener Gegenstand von seinem Eigentümer alsverloren gilt, mussdie elektronische oder Postadresse dieses Egentümersgefunden werden. Im einfachsten Fall wurde die Eigentümer-Identifizierung im Tag 10 abgelegt; in diesem Fall kann der Dritte 9 einfach diese Identifizierung lesen und den Eigentümer kontaktieren. Im Tag 10 kann beispielsweise die MSISDN-Nummer des Eigentümers vorhanden sein; der Dritte 9 kann einfach diese Nummer verwenden um eine telefonische Daten- oder Sprachverbindung mit dem Eigentümer aufzubauen. Dieser Vorgang kann manuell erfolgen, indem der Dritte selbst das Lesen des Tags und den Verbindungsaufbau initiiert, oder auch vollautomatisch, möglicherweise ohne dassder Dritte es bemerkt, erfolgen. In diesem Fall kann automatisch ermittelt werden, dass ein gelesener Tag 10 einen verlorenen Gegenstand 1 markiert, die MSISDN-Nummer des Eigentümers wird automatisch von einer Anwendung 31 im Mobilgerät 3 gelesen und eine Datenmeldung, zum Beispiel eine SMS oder E-Mail wird automatisch vorbereitet und an den Eigentümer automatisch oder nach Bestätigung des Dritten gesendet.

Das Lesen der MSISDN-Nummer ausdem Tag 10 erfordert jedoch Tags mit wiederbeschreibbaren Speicherbereichen. Wurde keine Eigentümer-Identifizierung gleich in den Tag 10 geschrieben, kann gemässden Ausführungsformen der Figuren 2 und 3 gleich diese Identifizierung aus der Datenbank 6 beziehungsweise aus der PML-Seite 7, die der Tag-Identifizierung entspricht, ermittelt werden.

Fallsdie Eigentümer-Identifizierung in einer der drei Ausführungsformen durch ein Alias ersetzt wurde, kann der findende Dritte 9 keine direkte Verbindung mit diesem Eigentümer aufbauen, sondern dies nur über den Anonymizer 5, der die Verknüpfung zwischen jedem Alias und jeder Eigentümer-Identifizierung kennt.

Der findende Dritte 9 kann auch in der Datenbank 6 beziehungsweise auf der PML-Seite 7 eintragen, dassder verlorene Gegenstand gefunden wurde. Dieser Eintrag kann manuell oder automatisch ausgelöst werden.

Um zu vermeiden, dassder findende Dritte 9 die Kosten für die Benachrichtigung des Eigentümersträgt, werden vorzugsweise Meldungen verwendet, die keine Kosten für den Sender verursachen. In einer Variante werden E-Mails gesendet. In einer zweiten Variante werden USSD gesendet. Möglich ist auch, dassein Call-Back Sprachanruf mit dem Eigentümer des gefundenen Gegenstands aufgebaut wird. Als Variante kann auch die relativ kurze Meldung über das Finden des Gegenstands 1 in einer anderen Datenmeldung des Dritten versteckt werden und automatisch innerhalb des Mobilfunknetzesdavon getrennt werden. In noch einer anderen Variante werden SMSoder andere Datenmeldungen verwendet, die zugunsten des Sendersdem Empfänger teurer verrechnet werden.

In einer Variante wird keine direkte Meldung vom findenden Dritten an den Eigentümer des Gegenstands gesendet. Stattdessen wird der Eigentümer nur indirekt, beispielsweise über die Datenbank 6, über die PML-Seite 7 oder über eine vom Dritten informierte Zwischenstelle, über das Finden des Gegenstandsbenachrichtigt. Auf diese Weise kann die Anonymität des Dritten mindestenstemporär, beispielsweise biszur Rückgabe des Gegenstands 1 oder zur Gutschreibung der Belohnung gewährleistet werden.

Nachdem der markierte Gegenstand wieder gefunden worden ist und der Eigentümer darüber informiert wurde, mussdie Rückgabe des Gegenstandsorganisiert werden. Dies kann direkt zwischen dem Eigentümer und dem findenden Dritten 9 organisiert werden, wenn beide Parteien sich kontaktiert haben. Möglich ist auch, dassder gefundene Gegenstand vorerst an eine Zwischenstelle, die beispielsweise vom Betreiber der Datenbank 6 verwaltet werden kann, gesendet wird und von dieser Zwischenstelle an den berechtigten Eigentümer weitergeleitet wird. Die Zwischenstelle kann auch die Zahlung der Belohnung an den findenden Dritten 9 und die entsprechende Belastung eines Geldkontos des Eigentümersveranlassen; dabei können auch Gebühren zugunsten der Zwischenstelle verrechnet werden. Die Zahlung der Belohnung und die Belastung des Eigentümers kann beispielsweise über ein Geldkonto der SIM-Karte erfolgen, insbesondere wenn die Zwischenstelle vom Mobilfunknetzbetreiber verwaltet wird. Die Zwischenstelle kann auch Testsveranlassen, um zu prüfen, ob der Gegenstand 1 wirklich dem registrierten Eigentümer gehört. Es kann beispielsweise geprüft werden, ob die mit dem Gegenstand gepaarte SM -Karte nicht selbst als verloren oder gestohlen angemeldet wurde.

Eine anonyme Rückgabe des Gegenstandsund Zahlung der Belohnung kann auch von der Zwischenstelle veranstaltet werden.

Die Zahlung der Belohnung kann auch über ein gesperrtesGeldkonto erfolgen, dasvom Eigentümer nach der Feststellung des Verlusts oder spätestens nach dem Hinweis auf das Finden des Gegenstands gutgeschrieben wird und der erst nach Rückgabe des Gegenstands zugunsten dem findenden Dritten belastet wird.

## Patentansprüche

1. Verfahren, um einen verlorenen oder gestohlenen Gegenstand (1) zu finden, mit folgenden Schritten, die vor dem Verlust des Gegenstands durchgeführt werden:
- der benannte Gegenstand (1) wird mit einem RFID-Tag (10) markiert, in welchem eine eindeutige Tag-Identifizierung (100) gespeichert ist,
- der Eigentümer des Gegenstands (1) greift kontaktlos auf den RFID-Tag (10) mit einem RFID-Lesegerät (2), das in einem Mobilfunktelefon (3) des Eigentümers eingebaut ist oder mit diesem Mobilfunktelefon (3) verbunden ist, zu,
- die benannte Tag-Identifizierung (100) wird mit einer Eigentümer-Identifizierung (300), die aus einem Identifizierungsmodul (30) im benannten Mobilfunktelefon (3) gelesen wird, gepaart,
und mit folgenden Schritten, die durchgeführt werden, wenn der benannte Gegenstand (1) von einem Dritten gefunden wird:
- die benannte Tag-Identifizierung (100) wird von einem zweiten RFID-Lesegerät (9) gelesen,
- die Eigentümer-Identifizierung (300), die mit der gelesenen Tag-Identifizierung (100) gepaart wurde, wird ermittelt,
- der benannte Eigentümer wird über das Finden des benannten Gegenstands (1) informiert,
**dadurch gekennzeichnet, dass** das Mobilfunktelefon als Mobilgerät (2, 3) periodisch eine Zeitmarke in den benannten Tag (10) schreibt.

2. Das Verfahren des Anspruchs 1, in welchem die Paarung der Tag-Identifizierung (100) mit der Eigentümer-Identifizierung (300) vom benannten Eigentümer ausgelöst wird.

3. Das Verfahren eines der Ansprüche 1 oder 2, in welchem die Paarung der Tag-Identifizierung (100) mit der Eigentümer-Identifizierung (300) in einer zentralen Datenbank (6) registriert wird, in welcher Paarungen von verschiedenen Eigentümern registriert sind.

4. Das Verfahren eines der Ansprüche 1 bis 3, in welchem ein elektronischer Schlüssel für die Paarung der Tag-Identifizierung (100) mit der Eigentümer-Identifizierung (300) verlangt wird.

5. Das Verfahren eines der Ansprüche 1 bis 4, in welchem die benannte Eigentümer-Identifizierung (300) durch ein Alias ersetzt wird,
wobei das benannte zweite RFID-Lesegerät nur das benannte Alias ermittelt,
wobei das benannte Alias durch die entsprechende Eigentümer Identifizierung (300) von einem Modul (5) ersetzt wird, um den benannten Eigentümer über das Finden des Gegenstands zu informieren.

6. Das Verfahren eines der Ansprüche 1 bis 5, in welchem eine Verbindung automatisch zwischen dem benannten RFID-Lesegerät (2, 3) und dem benannten Tag (10) aufgebaut wird und in welchem der Tag als verloren gilt, wenn die Verbindung nicht aufgebaut werden kann.

7. Das Verfahren eines der Ansprüche 1 bis 6, in welchem der Verlust eines Gegenstands anhand des Mobilgeräts (2, 3) des Eigentümers in einer zentralen Datenbank (6) registriert wird.

8. Das Verfahren eines der Ansprüche 1 bis 7, in welchem der Verlust eines Gegenstands auf einer Hypertext-Seite, die der Tag-Identifizierung (100) entspricht, angemeldet wird.

9. Das Verfahren eines der Ansprüche 1 bis 8, in welchem eine Belohnung für den Finder des benannten Gegenstands angeboten wird, wobei ein Finder des Gegenstands anhand der benannten Tag-Identifizierung die angebotene Belohnung prüfen kann.

10. Das Verfahren eines der Ansprüche 1 bis 9, in welchem die benannte Tag-Identifizierung im EPC-Format ist.

## Claims

1. Method for finding a lost or stolen object (1), with the following steps that must be performed before the object is lost:
- said object (1) is marked with a RFID tag (10) in which an unequivocal tag identification (100) is stored,
- the owner of the object (1) accesses the RFID tag (10) with a RFID reader device (2) that is built into a mobile radio telephone (3) of the owner or that is connected with this mobile radio telephone (3),
- said tag identification (100) is paired with an owner identification (300) that is read from an identification module (30) in said mobile telephone (3),
and with the following steps that are performed when said object (1) is found by a third party:
- said tag identification (100) is read by a second RFID reader device (9),
- the owner identification (300) that has been paired with the read tag identification (100) is determined,
- said owner is informed about the finding of said object (1),
**characterized in that** the mobile radio telephone as mobile device (2, 3) periodically writes a time mark in said tag (10).

2. The method of claim 1, wherein the pairing of the tag identification (100) with the owner identification (300) is triggered by said owner.

3. The method according to claim 1 or 2, wherein the pairing of the tag identification (100) with the owner identification (300) is recorded in a central database (6) in which pairings of different owners are recorded.

4. The method according to any of the claims 1 to 3, wherein an electronic key is requested for pairing the tag identification (100) with the owner identification (300).

5. The method according to any of the claims 1 to 4, wherein said owner identification (300) is replaced with an alias,
said second RFID reader device determining only said alias,
said alias being replaced with the corresponding owner identification (300) by a module (5) in order to inform said owner about the finding of the object.

6. The method according to any of the claims 1 to 5, wherein a connection is automatically built between said RFID reader device (2, 3) and said tag (10) and wherein the tag is considered lost if the connection cannot be established.

7. The method according to any of the claims 1 to 6, wherein the loss of an object is recorded with the aid of the mobile device (2, 3) of the owner in a central database (6).

8. The method according to any of the claims 1 to 7, wherein the loss of an object is announced on a Hypertext page corresponding to the tag identification (100).

9. The method according to any of the claims 1 to 8, wherein a reward for the finder of said object is offered, a finder of the object being able to check the offered reward on the basis of said tag identification.

10. The method according to any of the claims 1 to 9, wherein said tag identification is in the EPC format.

## Revendications

1. Méthode pour trouver un objet perdu ou volé (1), avec les étapes suivantes qui doivent être effectuées avant la perte de l'objet :
- ledit objet (1) est marqué d'une étiquette RFID (10) dans laquelle un marquage d'identification sans équivoque (100) est enregistré,
- le propriétaire de l'objet (1) accède sans contact à l' étiquette RFID (10) au moyen d'un dispositif de lecture RFID (2) qui est incorporé dans un téléphone mobile (3) du propriétaire ou est relié à ce téléphone mobile (3),
- ledit marquage d'identification (100) est combiné avec une identification de propriétaire (300) qui est lue dans un module d'identification (30) dans ledit téléphone mobile (3),
et avec les étapes suivantes qui doivent être effectuées lorsque ledit objet (1) est trouvé par un tiers :
- ledit marquage d'identification (100) est lu par un second dispositif de lecture RFID (9),
- l'identification de propriétaire (300) qui a été combinée avec le marquage d'identification (100) est déterminée,
- ledit propriétaire est informé de la découverte dudit objet (1),
**caractérisée en ce que** le téléphone mobile en tant que dispositif mobile (2, 3) écrit périodiquement une marque temps dans ladite étiquette (10).

2. La méthode selon la revendication 1, selon laquelle la combinaison du marquage d'identification (100) avec l'identification de propriétaire (300) est déclenchée par ledit propriétaire.

3. La méthode selon l'une des revendications 1 ou 2, selon laquelle la combinaison du marquage d'identification (100) avec l'identification de propriétaire (300) est enregistrée dans une base de données centrale (6) dans laquelle les combinaisons de plusieurs propriétaires sont enregistrées.

4. La méthode selon l'une des revendications 1 à 3, selon laquelle une clé électronique est requise pour combiner le marquage d'identification (100) avec l'identification de propriétaire (300).

5. La méthode selon l'une des revendications 1 à 4, selon laquelle ladite identification de propriétaire (300) est remplacée par un alias,
ledit second dispositif de lecture RFID ne détermine que ledit alias,
ledit alias est remplacé par l'identification de propriétaire correspondante (300) dans un module (5) pour informer ledit propriétaire de la découverte de l'objet.

6. La méthode selon l'une des revendications 1 à 5, selon laquelle une connexion est automatiquement établie entre ledit dispositif de lecture RFID (2, 3) et ladite étiquette (10) et selon laquelle le marquage est considéré comme perdu si la connexion ne peut pas être établie.

7. La méthode selon l'une des revendications 1 à 6, selon laquelle la perte d'un objet est enregistrée au moyen du dispositif mobile (2, 3) du propriétaire dans une base de données centrale (6).

8. La méthode selon l'une des revendications 1 à 7, selon laquelle la perte d'un objet est annoncée sur une page hypertexte qui correspond au marquage d'identification (100).

9. La méthode selon l'une des revendications 1 à 8, selon laquelle une récompense pour la personne qui a trouvé ledit objet est offerte, la personne ayant trouvé l'objet pouvant vérifier la récompense offerte sur la base dudit marquage d'identification.

10. La méthode selon l'une des revendications 1 à 9, selon laquelle ledit marquage d'identification est au format EPC.
